(19) Europäisches Patentamt
European Patent Office
Office européen des brevets

(11) **EP 3 336 780 A1**

(12) **EUROPEAN PATENT APPLICATION**

(43) Date of publication:
**20.06.2018 Bulletin 2018/25**

(51) Int Cl.:
***G06Q 10/06*** *(2012.01)*

(21) Application number: **17198850.4**

(22) Date of filing: **27.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.12.2016 JP 2016244597**

(71) Applicant: **FUJITSU LIMITED**
**Kanagawa 211-8588 (JP)**

(72) Inventor: **MURAKAMI, Ryo**
**Kawasaki-shi, Kanagawa 211-8588 (JP)**

(74) Representative: **Haseltine Lake LLP**
**Lincoln House, 5th Floor**
**300 High Holborn**
**London WC1V 7JH (GB)**

(54) **DEVICE FOR DECIDING NUMBER OF PERSONS TO BE ASSIGNED, METHOD FOR DECIDING NUMBER OF PERSONS TO BE ASSIGNED, AND PROGRAM FOR DECIDING NUMBER OF PERSONS TO BE ASSIGNED**

(57)    A device for deciding a number of persons to be assigned to an assembly line to which a predetermined number of robots are assigned, the device includes: a specification unit configured to specify a first time and a second time based on a time it takes to complete jobs to be assigned to the robot or the person, a takt time common to the robot and the person, and an operation efficiency of each of the robot and the person, the first number being a minimum number of persons with which neither a work time of the robot nor a work time of the person exceeds the takt time, the second number being less than the first number; a calculation unit configured to calculate a first cost of the first number of persons and the robot and a second cost of the second number of persons and the robot; and a decision unit configured to compare the first cost and the second cost, decide to assign the first number of persons to the assembly line when the first cost is less than the second cost, and decide to assign the second number of persons to the assembly line when the second cost is less than the first cost.

FIG. 5

EP 3 336 780 A1

**Description**

FIELD

Embodiments described herein relate to a device for deciding the number of persons to be assigned, a method for deciding the number of persons to be assigned, and a program for deciding the number of persons to be assigned.

BACKGROUND

In job planning for assigning jobs to stations of an assembly line for assembling products, the optimization is conducted taking into consideration the compliance with the order of jobs at the stations and the balance of workloads among the stations. It is difficult to manually conduct the optimization. Thus, there have been suggested various algorithms.
Additionally, there has been known a technique that reduces the assembly cost by optimizing the assembly line organization of an assembly process as disclosed in, for example, International Publication No. 2016/009483.

SUMMARY

According to an embodiment, there is provided a device for deciding a number of persons to be assigned to an assembly line to which a predetermined number of robots are assigned, the device including: a specification unit configured to specify a first time and a second time based on a time it takes to complete jobs to be assigned to the robot or the person, a takt time common to the robot and the person, and an operation efficiency of each of the robot and the person, the first number being a minimum number of persons with which neither a work time of the robot nor a work time of the person exceeds the takt time, the second number being less than the first number; a calculation unit configured to calculate a first cost of the first number of persons and the robot and a second cost of the second number of persons and the robot; and a decision unit configured to compare the first cost and the second cost, decide to assign the first number of persons to the assembly line when the first cost is less than the second cost, and decide to assign the second number of persons to the assembly line when the second cost is less than the first cost.
Advantageously, the device is capable of determining the appropriate number of persons to be assigned to an assembly line in which a person and a robot are assigned.

BRIEF DESCRIPTION OF DRAWINGS

FIG. 1 schematically illustrates a hardware configuration of a job planning device;
FIG. 2 is a functional block diagram of the job planning device;
FIG. 3 is an explanatory diagram of an assembly line;
FIG. 4A illustrates an example of a job plan that employs the number of persons with which a cycle time exceeds a takt time, and FIG. 4B illustrates an example of a job plan that employs the number of persons with which the cycle time does not exceed the takt time;
FIG. 5 is a flowchart of a process executed by the job planning device; and
FIG. 6 illustrates a variation of the embodiment.

DESCRIPTION OF EMBODIMENTS

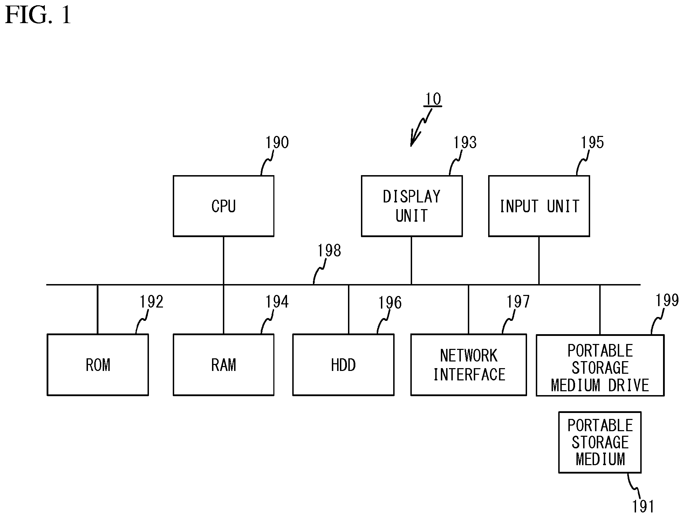

In an assembly line in which the number of robots to be used is preliminarily determined, jobs need to be organized after the number of persons to be assigned is preliminarily determined. In this case, it is difficult to determine which is better increasing the number of persons so that a total work time (cycle time) of a robot or person does not exceed a time limit (a takt time) or decreasing the number of persons even though the cycle time exceeds the takt time somewhat.
Hereinafter, a description will be given of an embodiment with reference to FIG. 1 through FIG. 5.

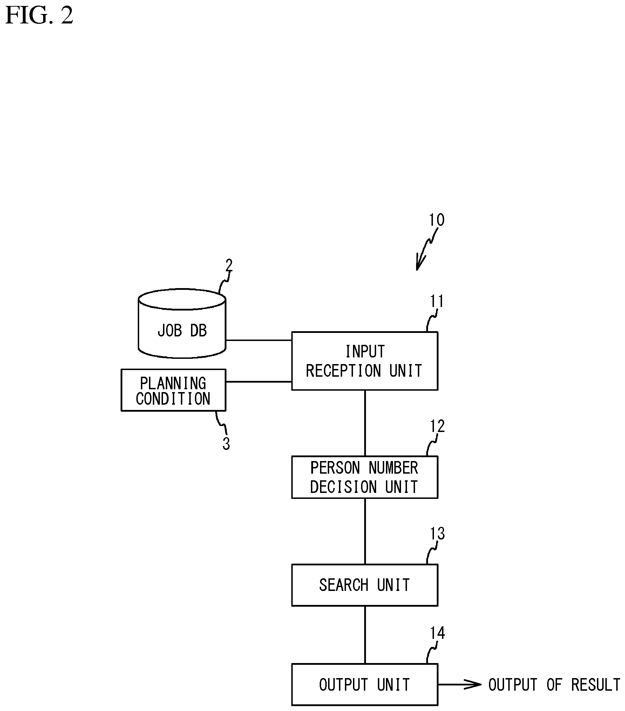

FIG. 1 illustrates a hardware configuration of a job planning device 10 in accordance with the embodiment. The job planning device 10 is a device that executes a process (job planning) for assigning a job to a person or a robot allocated to each station on an assembly line, and is also a device for deciding the number of persons to be assigned, the device deciding the number of persons to be assigned to each station before the job planning. The job planning device 10 of the present embodiment is an information processing device such as, for example, a personal computer (PC), and includes, as illustrated in FIG. 1, a central processing unit (CPU) 190, a read only memory (ROM) 192, a random access memory (RAM) 194, a storage unit (here, a hard disk drive (HDD)) 196, a network interface 197, and a portable storage medium drive 199, a display unit 193, and an input unit 195. The display unit 193 includes a liquid crystal display or the like, and the input unit 195 includes a keyboard and a mouse, a touch panel, or the like. These components of the job planning device 10 are coupled to a bus 198. The functions illustrated in FIG. 2 are implemented to the job planning device 10 by the execution of programs (including a program for deciding the number of persons to be assigned) stored in the ROM 192 or the HDD 196 or programs (including the program for deciding the number of persons to be assigned) read from a portable storage medium 191 by the portable storage medium drive 199 by the CPU 190. FIG. 2 also illustrates a job database (DB) 2 stored in the HDD 196 or the like of the job planning device 10. Examples of the portable storage medium 191 include, but are not limited to, portable storage medium such as CD-ROMs, DVD discs, and universal serial bus (USB) memories, and semiconductor memories such as flush memories.

FIG. 2 is a functional block diagram of the job planning device 10. The execution of the program by the CPU 190 causes the job planning device 10 to function as an input reception unit 11, a person number decision unit 12, a search unit 13, and an output unit 14 as illustrated in FIG. 2.

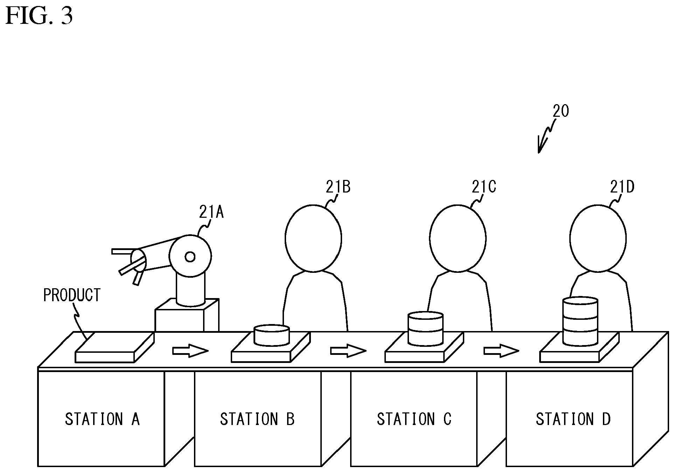

FIG. 3 is an explanatory diagram for describing an assembly line. As illustrated in FIG. 3, an assembly line 20 for assembling products includes, for example, four stations: stations A through D.

In the assembly line 20, products are conveyed from the station to the station by a belt conveyor (not illustrated) or the like. A robot 21A and persons 21B through 21D are assigned to the stations of the assembly line 20. In FIG. 3, the robot 21A is assigned to the station A, and the persons 21B through 21D are respectively assigned to the stations B through D. The robot 21A and the persons 21B through 21D respectively assigned to the stations A through D execute jobs assigned through the job planning to products conveyed in the assembly line 20 to produce the products.

The configuration example of the assembly line 20 is not limited to that illustrated in FIG. 3. For example, the assembly line 20 may include four or more stations. The robot 21A may be assigned to a station other than the station A, and the number of robots may be two or more.

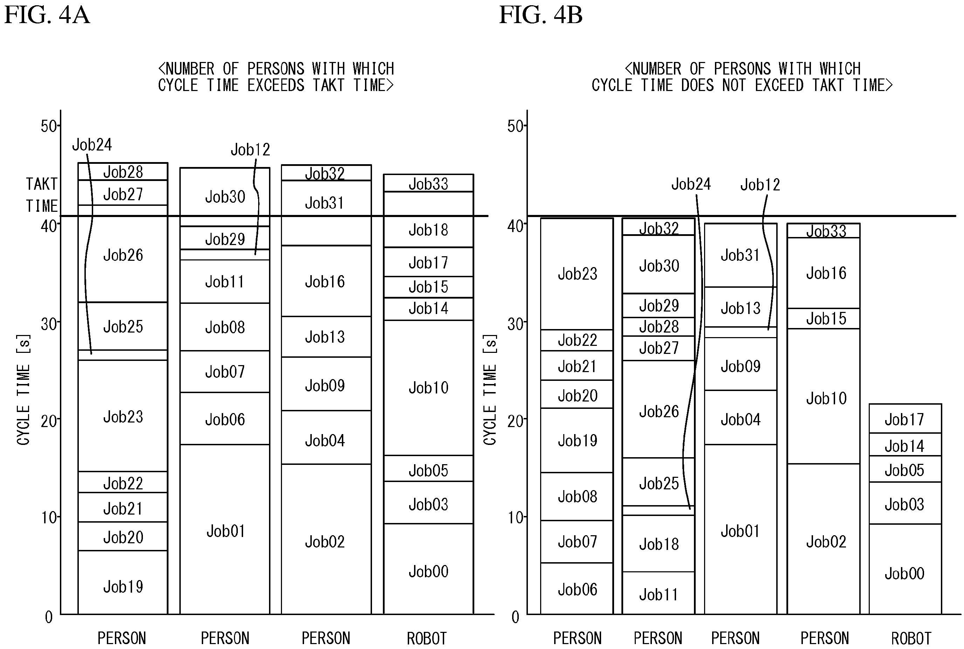

FIG. 4A and FIG. 4B are diagrams for describing job planning in the assembly line 20. FIG. 4A illustrates a job plan that employs the number of persons with which a cycle time exceeds a takt time, and FIG. 4B illustrates a job plan that employs the number of persons with which the cycle time does not exceed the takt time. The takt time is a time limit determined from a production plan. When a person executes excess jobs that are unable to be completed within the takt time, an overtime pay is paid. "JobXX" in FIG. 4A and FIG. 4B means a job, and the dimension in the vertical axis direction of each job represents the time it takes to complete each job.

In the example of FIG. 4A, the number of persons is three, and when jobs are uniformly assigned to persons and a robot, both the persons and the robot need to work beyond the takt time. On the other hand, in the example of FIG. 4B, the number of persons is four, jobs are assigned to each person as many as possible within the takt time, and the remaining jobs (odd jobs) are assigned to a robot. The details will be described later, but in the present embodiment, the person number decision unit 12 determines which is to be selected, the number of persons with which the cycle time exceeds the takt time as illustrated in FIG. 4A or the number of persons with which the cycle time does not exceed the takt time although the number of persons is larger as illustrated in FIG. 4B.

Referring back to FIG. 2, the input reception unit 11 receives an input of a planning condition 3 by the operational input from the user. Additionally, the input reception unit 11 refers to the job DB 2 that stores various information about jobs to be assigned in the job planning. The job DB 2 stores the job time of each job. The input reception unit 11 is able to calculate the total work time by referring to the job DB 2.

The planning condition 3 of which the input is received by the input reception unit 11 includes information about the takt time, the number of robots available, and the cost per unit time and the operation efficiency of each robot. The planning condition 3 includes a cost per unit time of each person capable of being assigned to the assembly line, an overtime pay (an increase rate to the cost per unit time), and information about operation efficiency. The planning condition 3 also includes information about a maximum time (an allowable excess time) for which a person or robot is allowed to work beyond the takt time. The allowable excess time is set in accordance to the situation of the assembly line or the situation of the factory in which the assembly line is installed. The planning condition 3 also includes an algorithm for initially assigning jobs and a search algorithm for obtaining a combination of jobs assigned to each station. Examples of the algorithm for initially assigning jobs include, but are not limited to, a first fit method and a strongest fit method. The examples of the search algorithm include a hill climbing method, a tabu search, and Simulated Annealing.

The person number decision unit 12 decides the number of persons to be assigned to the assembly line under the condition that the number of robots to be assigned to the assembly line is preliminarily determined in the planning condition 3. More specifically, the person number decision unit 12 determines which case is to be employed: the case in which the minimum number of persons is employed as far as the total work time (cycle time) of each of persons and robots does not exceed the takt time, jobs are assigned to the persons as many as possible, and the remaining jobs (odd jobs) are assigned to the robots as illustrated in FIG. 4B; or the case in which the number of persons one less than that of FIG. 4B is employed by allowing the cycle time to exceed the takt time, and jobs are substantially uniformly assigned to the persons and the robots as illustrated in FIG. 4B. In this case, the person number decision unit 12 calculates the cost required in the whole of the assembly line with respect to each case, and calculates the excess time when the cycle time exceeds the takt time (e.g., in the case of FIG. 4A) to determine which case is to be selected, the case where the cycle time exceeds the takt time or the case where the cycle time does not exceed takt time based on the calculated excess time and the cost.

The search unit 13 uses algorithms determined in the planning condition 3 to search a job plan suitable for the number of robots preliminarily determined and the number of persons decided by the person number decision unit 12. The search unit 13 searches the best job plan taking into consideration the compliance with the order of jobs and the balance of workloads. The output unit 14 outputs the job plan searched by the search unit 13 by file output or display output to the display unit 193.

Process by the Job Planning Device 10

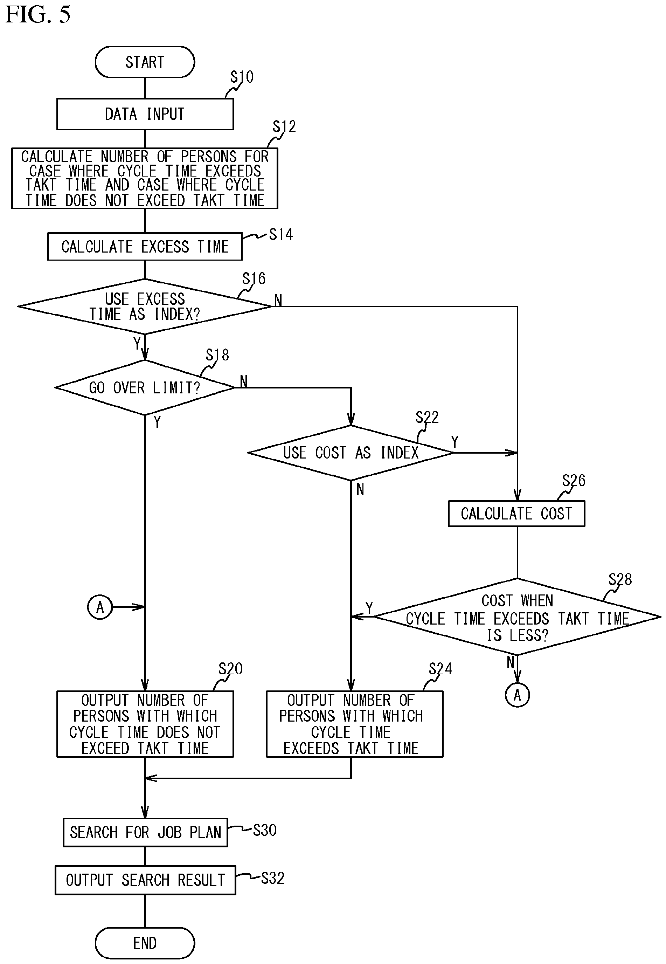

The process by the job planning device 10 of the present embodiment will be described along the flowchart of FIG. 5 with reference to other drawings as appropriately.

In the process of FIG. 5, at step S10, the input reception unit 11 receives the input of data such as the planning condition 3 and the job DB 2.

Then, at step S12, the person number decision unit 12 calculates the number of persons with which the cycle time exceeds the takt time (the case of FIG. 4A) and the number of persons with which the cycle time does not exceed the takt time (the case of FIG. 4B). More specifically, the person number decision unit 12 calculates the number of persons $N_H'$ with which the cycle time does not exceed the takt time by the following formula (1).

$$N_H' = \arg\min \sum_{i=1}^{N_H} c_{H,i} \tag{1}$$

Here, $c_{H,i}$ represents the cost per unit time of the i-th person. Thus, the above formula means that the value of $N_H$ that minimizes the sum of $c_{H,i}$ (i = 1 through $N_H$) is defined as $N_H'$. However, the condition represented by the following formula (2) needs to be met.

$$\sum_{i=1}^{N_H} v_{H,i} > \frac{T}{t} - \sum_{i=1}^{N_R} v_{R,i} \tag{2}$$

In the above formula (2), $N_R$ represents the number of robots, $v_{H,i}$ represents the operation efficiency of the i-th person, $v_{R,i}$ represents the operation efficiency of the i-th robot, T represents a total work time (the total time of the persons and the robots of all the jobs), and t represents the takt time. The operation efficiency of the person and the operation efficiency of the robot are a value obtained by dividing a time it takes for the person or robot to complete a job or a job group by a base time that is predetermined. The total work time is the time it takes if each of all the jobs is done in the corresponding base time.

Then, at step S14, the person number decision unit 12 calculates the difference (the excess time) At' between the total work time (cycle time) of one work subject and the takt time (t) based on the following formula (3). Here, the work subject means a person or robot. In the present embodiment, since $\Delta t'$ is calculated from the following formula (3), one value is calculated, but the excess time of each work subject differs from one another in practice (see FIG. 4A).

$$\Delta t' = \frac{T}{\sum_{i=1}^{N_H'-1} v_{H,i} + \sum_{i=1}^{N_R} v_{R,i}} - t \tag{3}$$

Then, at step S16, the person number decision unit 12 determines whether the excess time is used as an index. More specifically, the person number decision unit 12 checks whether the planning condition 3 of which the input has been received by the input reception unit 11 includes the allowable excess time, and determines that the excess time is used as the index when the allowable excess time is included. In this case, the determination at step S16 becomes YES, and the process moves to step S18. On the other hand, when the planning condition 3 does not include the allowable excess time, the determination at step S16 becomes NO, and the process moves to step S26.

When the determination at step S16 is YES and the process moves to step S18, the person number decision unit 12 determines whether the excess time Δt' goes over a limit, i.e., whether the excess time Δt' is greater than the allowable excess time. When the determination at step S18 is YES, the process moves to step S20, and the person number decision unit 12 outputs the number of persons $N_H$' with which the cycle time does not exceed the takt time to the search unit 13. As described above, by deciding the number of persons $N_H$' with which the cycle time does not exceed the takt time as the number of persons to be assigned to the assembly line, the number of persons appropriate to the situation of the assembly line or the factory in which the assembly line is installed is decided as the number of persons to be assigned to the assembly line. After the process of step S20, the process moves to step S30.

On the other hand, when the determination at step S18 is NO, that is, when the excess time Δt' is not greater than the allowable excess time, the process moves to step S22, and the person number decision unit 12 determines whether the cost is used as the index. In this case, the person number decision unit 12 determines whether the planning condition 3 includes information for calculating cost (e.g., information about the overtime pay, the cost per unit time, and the operation efficiency).

When the determination at step S22 is NO, the process moves to step S24, and the person number decision unit 12 outputs the number of persons $N_H$'-1 with which the cycle time exceeds the takt time to the search unit 13. Thereafter, the process moves to step S30.

On the other hand, when the determination at step S16 is NO (when the excess time is not used as the index), or when the determination at step S22 is YES (when the excess time is not greater than the allowable excess time and the cost is used as the index) the process moves to step S26. At step S26, the person number decision unit 12 calculates the cost. In this case, the cost of the person and the robot in the whole of the assembly line is represented by the following formula (4).

$$c(N_H, \Delta t) \equiv \sum_{i=1}^{N_H} (t + s_i \Delta t)\, c_{H,i} + (t + \Delta t) \sum_{i=1}^{N_R-1} c_{R,i}$$
$$+ \left\{ T - (t + \Delta t) \left( \sum_{i=1}^{N_H} v_{H,i} + \sum_{i=1}^{N_R-1} v_{R,i} \right) \right\} v_{R,R}\, c_{R,R} \tag{4}$$

Here, t represents the takt time, Δt represents the excess time, and $s_i$ represents the overtime pay (a premium rate with respect to the cost per unit time) of the i-th person. Additionally, $c_{R,R}$ represents the cost per unit time of a robot that is to execute odd jobs (the robot that is in charge of a remainder illustrated in FIG. 4B), and $v_{R,R}$ represents the operation efficiency of the robot that is to execute the odd jobs. The condition $c_{R,R} > c_{R,i}$ needs to be met as the condition to minimize the overall cost.

Here, the right-hand first member in the above formula (4) represents the cost of a person, the right-hand second member represents the cost of a robot that is not to execute odd jobs (the robot illustrated in FIG. 4A), and the right-hand third member represents the cost of a robot that is to execute odd jobs.

The person number decision unit 12 calculates $c(N_H' - 1, \Delta t')$ by using the cost per unit time $c_{H,i}$ and the operation efficiency $v_{H,i}$ of each of persons capable of being assigned to individual stations for the case where the cycle time exceeds the takt time (the example of FIG. 4A). When there are a plurality of combinations of persons capable of being assigned to individual stations, $c(N_H' - 1, \Delta t')$ is calculated for each combination, and the average thereof is then calculated. In addition, the person number decision unit 12 calculates $c(N_H', 0)$ by using the cost per unit time $c_{H,i}$ and the operation efficiency $v_{H,i}$ of each of persons capable of being assigned to individual stations for the case where the cycle time does not exceed the takt time (the example of FIG. 4B). When there are a plurality of combinations of persons capable of being assigned to individual stations, $c(N_{H'}, 0)$ is calculated for each combination, and the average thereof is then calculated.

Then, at step S28, the person number decision unit 12 determines whether the cost when the cycle time exceeds the takt time is less than the cost when the cycle time does not exceed the takt time. That is, it is determined whether $c(N_H' - 1, \Delta t') < c(N_H', 0)$. When the determination at step S28 is YES, the process moves to step S24, and the number of persons $N_H' - 1$ (the number of persons with lower cost) with which the cycle time exceeds the takt time is output to the search unit 13. Then, the process moves to step S30. On the other hand, when the determination at step S28 is NO, the process moves to step S20, and the number of persons $N_H'$ (the number of persons with lower cost) with which the cycle time does not exceed the takt time is output to the search unit 13. Thereafter, the process moves to step S30.

When the process moves to step S30 through step S20 or step S24, the search unit 13 searches a job plan. In this case, the search unit 13 searches the best job plan by using the number of persons output from the person number decision unit 12 and the number of robots preliminarily determined and taking into consideration the compliance with the order of jobs at each station and the balance of workloads among the stations (the persons and the robots). For example, the search unit 13 calculates the evaluation value indicating the difference between the takt time and the cycle times at the stations B through D to which the workers 21B through 21D are assigned for the case in which jobs are assigned to the workers 21B through 21D or the robot 21A, which are assigned to respective stations, based on the planning condition including the assignment of the workers 21B through 21D or the robot 21A to be assigned to each station on the assembly line 20, jobs to be assigned to each station, and the takt time, and the job information indicating whether the automation of each job is possible and the job time of each job obtained from the job DB 2. Then, the search unit 13 searches the job plan of the combination of jobs assigned to each station by solving the optimization problem under the condition that the evaluation value is minimized. In this case, the search unit 13 may search the job plan of the combination meeting the order constraint based on a penalty value corresponding to the number of violations of a precedence constraint.

Then, at step S32, the output unit 14 outputs the search result (the job plan).

The execution of the above process of FIG. 5 enables to appropriately conduct the job planning.

As clear from the above description, in the present embodiment, the person number decision unit 12 implements the functions as a specification unit configured to specify the number of persons $N_H'$, $N_H'$ - 1, a calculation unit configured to calculate the cost when the number of persons $N_H'$, $N_H'$ - 1 is employed, a decision unit configured to decide which number of persons $N_H'$ or $N_H'$ - 1 is employed based on the cost calculated by the calculation unit, and a determination unit configured to determine whether the excess time is greater than the allowable excess time (a threshold value) when the number of persons $N_H'$ - 1 is employed.

As described in detail above, in the present embodiment, the person number decision unit 12 calculates the minimum number of persons $N_H'$ with which neither the work time of the robot nor the work time of the person exceeds the takt time and the number of persons that is one less than $N_H'$ (the number of persons $N_H'$ - 1 with which the cycle time exceeds the takt time) (S12) based on the time (T) it takes to complete jobs to be assigned to a robot or person, the takt time (t) common to the robot and the person, and the respective operation efficiencies ($v_{H, i}$, $v_{R, i}$) of the robot and the person. In addition, the person number decision unit 12 calculates the cost $c(N_H', 0)$ of the number $N_H'$ of persons and the robot, and the cost $c(N_H' - 1, \Delta t')$ of the number $N_H'$-1 of persons and the robot by using the above formula (4) (S26). Then, when the cost $c(N_H', 0)$ < the cost $c(N_H' - 1, \Delta t')$, the person number decision unit 12 decides to assign the number $N_H'$ of persons to the assembly line, and outputs the decision to the search unit 13. On the other hand, when the cost $c(N_{H'}, 0)$ > $c(N_H' - 1, \Delta t')$, the person number decision unit 12 decides to assign the number $N_H'$-1 of persons to the assembly line, and outputs the decision to the search unit 13 (S28, S20, S24). This configuration allows the present embodiment to decide the appropriate number of persons taking into consideration the cost of the assembly line. In this case, the appropriate number of persons is easily and expeditiously decided based on the above formulas, and thus the time necessary for the job planning is reduced.

As an example, it has conventionally taken 5.5 days to plan a process plan: 0.5 day for data input and process planning; 1.5 days for process analysis (line simulation (product constraint check, MCT prediction, technical problems, feasibility study)), 3 days for study of specifications of automated machines (system structure study, cost measures, effect prediction); and 0.5 day for a comparative review between multiple specification plans. In contrast, the present embodiment is able to reduce the time for the process analysis, the study of specifications of automated machines, and the comparative review between multiple specification plans, and thereby is able to plan the process plan in about three days.

In addition, in the present embodiment, the person number decision unit 12 determines whether the time (excess time $\Delta t'$) by which the work time of the robot or person exceeds the takt time is greater than a threshold value preliminarily determined (the allowable excess time) under the assumption that the number $N_H'$ - 1 of persons are assigned to the assembly line (S18), and when the excess time is greater than the allowable excess time (S18: YES), decides to assign the number $N_H'$ of persons to the assembly line (S20), while when the excess time $\Delta t'$ is not greater than the allowable excess time (S18: NO), decides one of the number of persons $N_H'$ and the number of persons $N_H'$-1 as the number of persons to be assigned to the assembly line based on the cost calculation result (S28, S20, S24). As described above, in the present embodiment, when the excess time $\Delta t'$ is greater than the allowable excess time, the number of persons $N_H'$ is employed without calculating the cost. Thus, the appropriate number of persons is decided taking into consideration the situation of the assembly line or the situation of the factory in which the assembly line is installed.

In addition, in the present embodiment, the person number decision unit 12 calculates the cost of the person based on the cost per unit time within the takt time and the cost per unit time when the cycle time exceeds the takt time. This configuration enables to calculate the cost of the person taking into consideration the overtime pay.

In addition, in the present embodiment, the method of calculating the cost of the robot is made to be different between the case where the robot works beyond the takt time and the case where the robot works for the time less than the takt time. Thus, the cost of the robot is appropriately calculated in the case of FIG. 4A and the case of FIG. 4B.

In the above embodiment, at step S26, when there are a plurality of combinations of persons capable of being assigned to individual stations, the person number decision unit 12 calculates the average of $c(N_H' - 1, \Delta t)$ and the

average of $c(N_H', \Delta t)$ calculated for each combination, but this does not intend to suggest any limitation. For example, the minimum value of $c(N_H' - 1, \Delta t)$ calculated for each combination and the minimum value of $c(N_H', \Delta t)$ calculated for each combination may be calculated, and then, the minimum value of $c(N_H'-1, \Delta t)$ may be compared with the minimum value of $c(N_H', \Delta t)$. In this case, the person number decision unit 12 may output the combination that minimizes $c(N_H'-1, \Delta t)$ and $c(N_H', \Delta t)$ to the search unit 13. In this case, the search unit 13 may conduct the job planning most suitable for the obtained combination of persons.

In the above embodiment, the search unit 13 may use the cost $c(H, \Delta t)$ and the excess time $\Delta t'$ of the formula (4), or the work time of the robot as an evaluation index, and search a job plan based on the evaluation index (for example, so that the evaluation index is minimized).

The above embodiment describes a case where the number of persons with which the cycle time exceeds the takt time is assumed to be $N_H' - 1$, but does not intend to suggest any limitation. The number of persons with which the cycle time exceeds the takt time may be $N_H' - 2$, $N_H' - 3$, or the like.

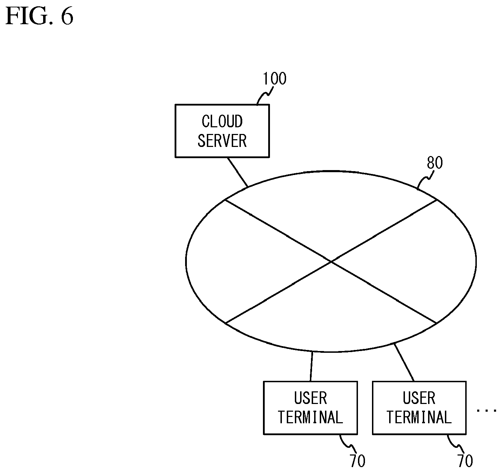

The above embodiment describes a case where the job planning device 10 has the functions of FIG. 2, but does not intend to suggest any limitation. For example, each function of FIG. 2 may be implemented in a cloud server 100 coupled to a network 80 such as the Internet illustrated in FIG. 6. In this case, the cloud server 100 receives the planning condition input from a user terminal 70, and executes the process of FIG. 5 to create a job plan. Then, the job plan is transmitted from the cloud server 100 to the user terminal 70, and the received job plan is used in the user terminal 70. The cloud server 100 may be installed in a domestic location or an overseas location.

The above-described processing functions are implemented by a computer. In this case, a program in which processing details of the functions that a processing device (CPU) is to have are written are provided. The execution of the program by the computer allows the computer to implement the above described processing functions. The program in which the processing details are written can be stored in a storage medium (however, excluding carrier waves) capable of being read by a computer.

When the program is distributed, it may be sold in the form of a portable storage medium such as a DVD (Digital Versatile Disc) or a CD-ROM (Compact Disc Read Only Memory) storing the program. The program may be stored in a storage device of a server computer, and the program may be transferred from the server computer to another computer over a network.

A computer executing the program stores the program stored in a portable storage medium or transferred from a server computer in its own storage device. The computer then reads the program from its own storage device, and executes a process according to the program. The computer may directly read the program from a portable storage medium, and execute a process according to the program. Alternatively, the computer may successively execute a process, every time the program is transferred from a server computer, according to the received program.

Although the exemplary embodiments of the present invention have been illustrated in detail, the present invention is not limited to the above-mentioned embodiments, and other embodiments, variations and modifications may be made without departing from the scope of the present invention as defined by the appended claims.

**Claims**

1. A device (10) for deciding a number of persons to be assigned to an assembly line to which a predetermined number of robots are assigned, the device comprising:

   a specification unit (12) configured to specify a first time and a second time based on a time it takes to complete jobs to be assigned to the robot or the person, a takt time common to the robot and the person, and an operation efficiency of each of the robot and the person, the first number being a minimum number of persons with which neither a work time of the robot nor a work time of the person exceeds the takt time, the second number being less than the first number;
   a calculation unit (12) configured to calculate a first cost of the first number of persons and the robot and a second cost of the second number of persons and the robot; and
   a decision unit (12) configured to compare the first cost and the second cost, decide to assign the first number of persons to the assembly line when the first cost is less than the second cost, and decide to assign the second number of persons to the assembly line when the second cost is less than the first cost.

2. The device according to claim 1, further comprising:

   a determination unit (12) configured to determine whether a time by which the work time of the robot or the person exceeds the takt time is greater than a threshold value preliminarily determined under an assumption that the second number of persons specified by the specification unit are assigned to the assembly line, wherein

the decision unit is configured to:

when the time by which the work time of the robot or the person exceeds the takt time is greater than the threshold value, decide to assign the first number of persons to the assembly line; and
when the time by which the work time of the robot or the person exceeds the takt time is not greater than the threshold value,

compare the first cost and the second cost,
decide to assign the first number of persons to the assembly line when the first cost is less than the second cost, and
decide to assign the second number of persons to the assembly line when the second cost is less than the first cost.

3. The device according to claim 1 or 2, wherein
the calculation unit is configured to calculate the cost of the person based on a cost per unit time within the takt time and a cost per unit time beyond the take time of each of the person.

4. The device according to any one of claims 1 through 3, wherein
a method of calculating the cost of the robot is made to be different between a case where the robot works beyond the takt time and a case where the robot works for a time less than the takt time.

5. The device according to any one of claims 1 through 4, wherein
the second number is one less than the first number.

6. A method, implemented by a computer, for deciding the number of persons to be assigned to an assembly line to which a predetermined number of robots are assigned, the method comprising:

specifying a first time and a second time based on a time it takes to complete jobs to be assigned to the robot or the person, a takt time common to the robot and the person, and an operation efficiency of each of the robot and the person, the first number being a minimum number of persons with which neither a work time of the robot nor a work time of the person exceeds the takt time, the second number being less than the first number (S 12);
calculating a first cost of the first number of persons and the robot and a second cost of the second number of persons and the robot (S26); and
comparing the first cost and the second cost, and deciding to assign the first number of persons to the assembly line when the first cost is less than the second cost and to assign the second number of persons to the assembly line when the second cost is less than the first cost through (S28, S20, S24).

7. The method according to claim 6, further comprising
determining whether a time by which the work time of the robot or the person exceeds the takt time is greater than a threshold value preliminarily determined under an assumption that the second number of persons specified in the specifying are assigned to the assembly line, wherein
the deciding includes:

when the time by which the work time of the robot or the person exceeds the takt time is greater than the threshold value, deciding to assign the first number of persons to the assembly line; and
when the time by which the work time of the robot or the person exceeds the takt time is not greater than the threshold value, comparing the first cost and the second cost and deciding to assign the first number of persons to the assembly line when the first cost is less than the second cost and to assign the second number of persons to the assembly line when the second cost is less than the first cost.

8. The method according to claim 6 or 7, wherein
the calculating includes calculating the cost of the person based on a cost per unit time within the takt time and a cost per unit time beyond the take time of each of the person.

9. The method according to any one of claims 6 through 8, wherein
in the calculating, a method of calculating the cost of the robot is made to be different between a case where the robot works beyond the takt time and a case where the robot works for a time less than the takt time.

10. The method according to any one of claims 6 through 9, wherein
the second number is one less than the first number.

11. A program for deciding the number of persons to be assigned to an assembly line to which a predetermined number of robots are assigned, the program causing a computer to execute a process, the process comprising:

specifying a first time and a second time based on a time it takes to complete jobs to be assigned to the robot or the person, a takt time common to the robot and the person, and an operation efficiency of each of the robot and the person, the first number being a minimum number of persons with which neither a work time of the robot nor a work time of the person exceeds the takt time, the second number being less than the first number (S 12);
calculating a first cost of the first number of persons and the robot and a second cost of the second number of persons and the robot (S26); and
comparing the first cost and the second cost, and deciding to assign the first number of persons to the assembly line when the first cost is less than the second cost and to assign the second number of persons to the assembly line when the second cost is less than the first cost through (S28, S20, S24).

FIG. 1

10

190

CPU

193

DISPLAY
UNIT

195

INPUT UNIT

198

192

ROM

194

RAM

196

HDD

197

NETWORK
INTERFACE

199

PORTABLE
STORAGE
MEDIUM DRIVE

PORTABLE
STORAGE
MEDIUM

191

FIG. 2

FIG. 3

FIG. 4A

<NUMBER OF PERSONS WITH WHICH
CYCLE TIME EXCEEDS TAKT TIME>

FIG. 4B

<NUMBER OF PERSONS WITH WHICH
CYCLE TIME DOES NOT EXCEED TAKT TIME>

13

FIG. 5

START

DATA INPUT ~S10

CALCULATE NUMBER OF PERSONS FOR CASE WHERE CYCLE TIME EXCEEDS TAKT TIME AND CASE WHERE CYCLE TIME DOES NOT EXCEED TAKT TIME ~S12

CALCULATE EXCESS TIME ~S14

USE EXCESS TIME AS INDEX? ~S16 — N

Y

GO OVER LIMIT? ~S18 — N

Y

USE COST AS INDEX ~S22 — Y

N

CALCULATE COST ~S26

(A)

COST WHEN CYCLE TIME EXCEEDS TAKT TIME IS LESS? ~S28

Y

N

(A)

OUTPUT NUMBER OF PERSONS WITH WHICH CYCLE TIME DOES NOT EXCEED TAKT TIME ~S20

OUTPUT NUMBER OF PERSONS WITH WHICH CYCLE TIME EXCEEDS TAKT TIME ~S24

SEARCH FOR JOB PLAN ~S30

OUTPUT SEARCH RESULT ~S32

END

FIG. 6

Europäisches
Patentamt

European
Patent Office

Office européen
des brevets

**EUROPEAN SEARCH REPORT**

Application Number

EP 17 19 8850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/110069 A1 (NISHIZONO SHIGEO [JP]) 12 June 2003 (2003-06-12) * paragraph [0014] - paragraph [0016] * * abstract * ----- | 1-11 | INV. G06Q10/06 |
| X | US 2014/303767 A1 (KLUMPP WILLI [DE] ET AL) 9 October 2014 (2014-10-09) * abstract * * paragraph [0002] - paragraph [0015] * * paragraph [0024] - paragraph [0028] * ----- | 1-11 | |

TECHNICAL FIELDS
SEARCHED (IPC)

G06Q

The present search report has been drawn up for all claims

| Place of search | Date of completion of the search | Examiner |
|---|---|---|
| Munich | 14 December 2017 | Lopes Margarido, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 19 8850

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2017

| Patent document cited in search report | Publication date | Patent family member(s) | | Publication date |
|---|---|---|---|---|
| US 2003110069 A1 | 12-06-2003 | JP | 2003157309 A | 30-05-2003 |
| | | US | 2003110069 A1 | 12-06-2003 |
| US 2014303767 A1 | 09-10-2014 | CN | 103988136 A | 13-08-2014 |
| | | EP | 2788828 A1 | 15-10-2014 |
| | | JP | 2015506021 A | 26-02-2015 |
| | | US | 2014303767 A1 | 09-10-2014 |
| | | WO | 2013083143 A1 | 13-06-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016009483 A